# EUROPÄISCHE PATENTSCHRIFT

(11) **EP 2 069 659 B1**
(45) Veröffentlichungstag und Bekanntmachung des Hinweises auf die Patenterteilung: **03.03.2010**
(21) Anmeldenummer: 07764887.1
(22) Anmeldetag: 27.06.2007
(51) Int. Cl.: F16J 15/08

(54) **FLACHDICHTUNG MIT VERFORMUNGSBEGRENZER**
FLAT SEAL HAVING A DEFORMATION LIMITER
JOINT PLAT AVEC LIMITEUR DE DÉFORMATION

(30) Priorität: 06.10.2006 DE 102006047424
(43) Veröffentlichungstag der Anmeldung: 17.06.2009
(73) Patentinhaber: Federal-Mogul Sealing Systems GmbH, 57562 Herdorf (DE)
(72) Erfinder: MÜLLER, Jan, 57290 Neunkirchen (DE)
(74) Vertreter: Kurig, Thomas
(86) Internationale Anmeldenummer: PCT/EP2007/005687
(87) Internationale Veröffentlichungsnummer: WO 2008/043400

(56) Entgegenhaltungen:
- EP-B1- 1 290 364
- DE-A1-102005 003 017
- US-A1- 2003 062 691

## Beschreibung

Die vorliegende Erfindung betrifft eine Flachdichtung mit mindestens einer metallischen Lage und insbesondere eine metallische Lage einer Flachdichtung, die als ein Verformungsbegrenzer dient. Die metallische Flachdichtung kann insbesondere als Zylinderkopfdichtung, wie in Brennkraftmaschinen zum Abdichten von Bauteilen, eingesetzt werden, aber auch für andere Arten von Dichtung wie zum Beispiel Flanschdichtungen ausgebildet sein.

Eine Zylinderkopfdichtung wird in einem Verbrennungsmotorsystem zwischen dem Motorblock und dem Zylinderkopf eingespannt. Ihre Hauptaufgabe ist die Abdichtung des Brennraums, der Öldurchgänge und der Kühlmittelbereiche. Außerdem dient sie als Kraftübertragungsglied zwischen Zylinderkopf und Zylinderblock. Dabei müssen im Betrieb des Motors auftretende Dichtspaltschwingungen elastisch ausgeglichen werden.

Um besonders in Bereichen der Zylinderkopfdichtung um Durchgangsöffnungen z. B. Brennraumöffnungen oder Kühlflüssigkeits- und Motoröldurchtritt herum die Dichtwirkung einer Zylinderkopfdichtung zu sichern bzw. zu erhöhen, wird mindestens eine Lage der Zylinderkopfdichtung im Allgemeinen mit Sicken oder Kröpfungen versehen, die diese Öffnungen in der Regel vollständig umschließen. Durch die Sicken oder Kröpfungen wird auch die erforderliche Elastizität der Zylinderkopfdichtung gewährleistet.

Die elastische Verformbarkeit der Sicke hängt im Wesentlichen von der Bauteilsteifigkeit ab, das heißt, je nach Steifigkeit von Zylinderkopf und Motorblock werden die Sicken mehr oder weniger stark verformt. Diese elastische Fähigkeit der Sicke lässt jedoch mit der Zeit nach. Zu große Dichtspaltschwingungen können zudem zu einer Überlastung der Sicken führen. Es kann dann zur Abnahme der Sickenkraft und des Rückfederungspotenzials oder gar zu Sickenrissen kommen. Deswegen setzt man heutzutage üblicherweise Verformungsbegrenzer ein, die auch als "Stopper" oder "INSTOP" bezeichnet werden. Dadurch wird eine vollständige plastische Verformung verhindert und optimale Bedingungen bezüglich Dauerhaltbarkeit und Rückfederungsvermögen erreicht. Diese Verformungsbegrenzer können zum Beispiel durch Umbiegen einer der metallischen Lagen erreicht werden oder es werden weitere Stopperlagen zwischen den Funktionslagen der Dichtung eingesetzt.

Aus der EP 1 290 364 sind sogenannte Wellenstopper und sogenannte Trapezstopper bekannt. Dabei sind Wellenstopper metallische Lagen, in die eine Wellenform eingeprägt ist und Trapezstopper sind Wellenstopper, bei denen die jeweiligen Wellenberge bzw. Wellentäler abgeflacht bzw. abgeplattet sind. Die Wellenstopper und Trapezstopper zeichnen sich dadurch aus, dass sie sich den gegebenen Verspannungs-, Temperatur- und Steifigkeitsbedingungen ideal anpassen und dabei den gegebenen Bauraum optimal ausnützen.

Durch seine wellenförmige Form weist der Wellenstopper einen großen und variablen Elastizitätsbereich auf. Durch Variation der Parameter des Wellenstoppers, wie Höhe der metallischen Lage, Amplitude der eingeprägten Wellenform und Radius der eingeprägten Wellenform kann der Wellenstopper sich der gegebenen Motorsteifigkeit anpassen. Durch dieses Verhalten werden die Pressungsspitzen bei jedem Betriebszustand egalisiert und die Pressungen auf die Bauteile harmonisiert.

Um die Pressungsamplitude der Flächenpressung verringern zu können, wurde zusätzlich zur Wellenform eine sogenannte Trapezform entwickelt. Dieser abgewandelte Wellenstopper verfügt über ein ausgeprägtes elastisch-plastisches Verhalten bei gleichzeitig reduzierter Flächenpressung. Die Auflagefläche kann den Anforderungen entsprechend angepasst und verteilt werden.

Aufgabe der vorliegenden Erfindung ist es daher, einen Stopper bereitzustellen, der einerseits die Vorteile eines Wellenstoppers und eines Trapezstoppers miteinander verbindet.

Erfindungsgemäß wird eine Kontur angegeben, die mit Ecken versehene und abgerundete Abschnitte aufweist und die sehr variabel auf die entsprechenden Druck- und Dichteverhältnisse abstimmbar ist. Der Stopper gemäß der Erfindung verhält sich im eigentlichen Arbeitsbereich steifer als ein Wellerstopper und erfüllt somit seine Funktion, den geschweißten Stopper zu ersetzen noch besser. Ein weiterer Vorteil der Kontur des erfindungsmäßigen Stoppers ist, dass das Stegwerkzeug, das bisher zur Prägung eines Wellenstoppers verwendet wird, weiterhin verwendet werden kann. Dadurch wird eine kostengünstige Lösung erhalten.

Gemäß einem ersten Aspekt der vorliegenden Erfindung wird eine Flachdichtung mit mindestens einer metallischen Lage bereitgestellt, wobei die mindestens eine metallische Lage zumindest teilweise eine Profilierung aufweist. Die Profilierung wird z. B. in die metallische Lage eingeprägt und weist im Querschnitt auf der einen Seite der metallischen Lage eine wellenförmige Struktur auf. Die Profilierung ist dadurch gekennzeichnet, dass die der wellenförmigen Struktur gegenüberliegenden Seite eine Kontur aufweist, in der sich mit Ecken versehene und abgerundete Abschnitte abwechseln. Die wellenförmige Struktur und die abgerundete Elemente der Kontur müssen nicht notwendigerweise eine Sinusform aufweisen, sondern es sind auch andere Wellenformen möglich. Des Weiteren sind die mit Ecken versehene Abschnitte der Kontur nicht auf die Anzahl der Ecken oder bestimmte Winkel begrenzt. Durch die Kombination der wellenförmigen Struktur mit der Kontur ergibt sich ein abweichendes Verformungsverhalten zum beidseitig abgerundeten Stopper. Dadurch wird die Steifigkeit des Stoppers gemäß der Erfindung erhöht.

Vorzugsweise weist die mindestens eine metallischen Lage benachbart zu der Profilierung eine Sicke auf. Durch diese Anordnung kann die erfindungsmäßige Profilierung als Verformungsbegrenzer bzw. Stopper für die Sicke wirken, selbst wenn die Flachdichtung nur aus einer Lage besteht.

Vorzugsweise ist die Profilhöhe der Profilierung, die sich aus der Amplitude der wellenförmigen Struktur und der Höhe der Kontur zusammensetzt, kleiner ist als Höhe der Sicke. Dadurch wird gewährleistet, dass die volle Dichtwirkung der Sicke aufrecht erhalten wird.

In einer Ausführungsform weisen die Wellenberge der wellenförmigen Struktur und/oder die abgerundeten Abschnitte der Kontur gleichmäßige Abstände auf. Dadurch kann die Druckverteilung auf den Zylinderkopf bzw. den Motorblock gleichmäßig gehalten werden.

In einer weiteren Ausführungsform weisen die Wellenberge der wellenförmigen Struktur und/oder die abgerundeten Abschnitte der Kontur unterschiedliche Abstände auf. Dadurch lässt sich der Stopper den jeweiligen Anfordernissen an die Flachdichtung anpassen. Insbesonders Elastizität und Federsteife der Flachdichtung können individuell lokal eingestellt werden.

Vorzugsweise fluchten die Wellenberge der wellenförmigen Struktur und die abgerundeten Abschnitte der Kontur im Wesentlichen senkrecht zu der metallischen Lage. Dadurch ist der Materialquerschnitt an der Stelle der metallischen Lage, an der sich die Wellenberge der wellenförmigen Struktur bzw. die abgerundeten Abschnitte befinden, dicker als die gleiche Stelle eines reinen Wellenstopper. Dies führt zu einer erhöhten Steifigkeit der Flachdichtung.

Gemäß einer weiteren Ausführungsform variiert die Profilhöhe innerhalb der Profilierung. Das bedeutet, dass die Amplitude der wellenförmigen Struktur und die Höhe abgerundeten Abschnitte innerhalb der Profilierung individuell an die jeweilige Geometrie der Flachdichtung und der umgrenzenden Motorteile angepasst werden können. Dadurch lassen sich die Elastizität der Flachdichtung und die Federsteife lokal beeinflussen.

Gemäß einem weiteren Aspekt weist die Flachdichtung eine weitere metallische Lage mit einer ähnlichen Profilierung wie die erste metallische Lage auf. Dadurch kann bestimmten Dickenverhältnissen und Druckverhältnissen innerhalb der Flachdichtung Rechnung getragen werden.

Vorzugsweise ist die weitere metallische Lage dabei spiegelsymmetrisch der ersten metallischen Lage angeordnet. Dadurch bleiben die günstigen Eigenschaften in Bezug auf Elastizität und Steifigkeit der Flachdichtung erhalten. Es können durch die beiden metallischen Lagen mit den Profilierungen auch Sicken eingespart werden und trotzdem die erwünschte Dichtwirkung bei ausreichender Spannkraft erhalten bleiben. Dabei steigt je nach Orientierung der beiden Lagen die Auflagefläche des Stoppers auf die benachbarten Dichtungslagen bzw. die angrenzenden Motorteile, die Elastizität und die Steifigkeit des Stoppers.

Gemäß einer weiteren Ausführungsform sind die Profilierung der ersten metallischen Lage und die Profilierung der weiteren metallischen Lage gegeneinander versetzt angeordnet. Dadurch kann das Dichtverhalten weiter gezielt beeinflusst werden.

Die beiden metallischen Lagen können unterschiedliche Profilierungen aufweisen. Die beiden Lagen können bezüglich ihrer Länge, ihrer Tiefe, der Amplitude, des Winkels, des Abstands ihrer wellenförmigen Struktur und der Höhe, die Winkel, des Radius, der Anzahl der Ecken und des Abstandes der abgerundeten Abschnitte der Kontur unterschiedlich sein. Dadurch kann das Druckprofil einer Flachdichtung individuell in Bezug auf einzelne Anforderungen und einzelnen Gegebenheiten gestaltet werden.

Vorzugsweise ist mindestens eine der metallischen Lagen aus elastischem Federstahl hergestellt. Es kann jedoch jedes andere geeignete Material verwendet werden, z. B. ein kalt verformbarer, bei Temperierung aushärtender Stahl.

Natürlich können weitere Lagen in die Flachdichtung eingebracht werden, die einen Stopper mit der erfindungsmäßigen Profilierung enthalten.

Die vorliegende Erfindung soll nun anhand von Zeichnungen verschiedener Ausführungsformen der Erfindung genauer beschrieben werden.

Figur 1 zeigt eine schematische, seitliche Schnittansicht durch einen Teil einer Flachdichtung mit einer erfindungsmäßigen Profilierung, die als Stopper für eine Sicke wirkt.

Figur 2 zeigt eine schematische, seitliche Schnittansicht durch einen Teil einer Flachdichtung mit einer weiteren erfindungsmäßigen Profilierung, die als Stopper für eine Sicke wirkt.
Figur 3 zeigt eine schematische, seitliche Schnittansicht durch einen Teil einer Flachdichtung mit einer weiteren erfindungsmäßigen Profilierung, die als Stopper für eine Sicke wirkt.

Figur 4 zeigt eine schematische, seitliche Schnittansicht durch einen Teil einer dreilagigen Flachdichtung.

Figuren 5a und 5b zeigen jeweils eine schematische, seitliche Schnittansicht durch einen Teil einer Flachdichtung mit zwei Lagen mit der erfindungsmäßigen Profilierung.

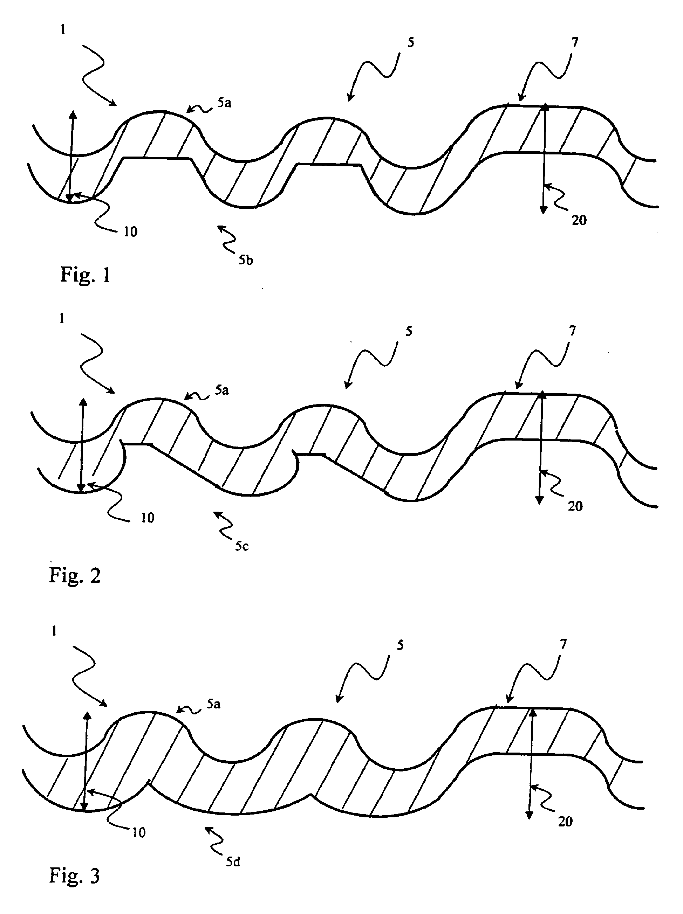

Figur 1 stellt einen Ausschnitt einer metallischen Lage 1 in einer Flachdichtung dar. In die metallische Lage ist eine Profilierung 5 als Stopper eingeprägt, die auf der einen Seite eine wellenförmige Struktur 5a und auf der anderen Seite eine Kontur 5b aufweist, die aus einer wellenförmigen Struktur besteht, bei der Spitzen der Wellentäler abgeflacht sind. Die Profilhöhe 10 der Profilierung erstreckt sich zwischen der Amplitude der wellenförmigen Struktur und der Amplitude der Wellenberge der Kontur. Zu dem Stopper benachbart ist eine Sicke 7 angeordnet, die eine Höhe 20 aufweist. Diese Höhe 20 der Sicke ist größer als die Profilhöhe 10 der Profilierung. Die Sicke muss nicht notwendigerweise in dieselbe Richtung wie die wellenförmige Struktur in die metallische Lage eingeprägt sein, sie kann sich auch in Richtung der Kontur erstrecken.

Figur 2 zeigt eine schematische, seitliche Schnittansicht durch einen Teil einer Flachdichtung mit einer weiteren Ausführungsform der erfindungsmäßigen Profilierung. Die metallische Lage 1 der Flachdichtung weist eine Profilierung 5 auf. Die Profilierung 5 umfasst eine wellenförmige Struktur 5a und eine Kontur 5c, bei der sich asymmetrische, mit Ecken versehene und asymmetrische, abgerundete Abschnitte abwechseln. Die Profilhöhe 10 dieser Profilierung erstreckt sich zwischen der Amplitude der wellenförmigen Struktur und der Höhe der abgerundeten Abschnitte. Eine Sicke 7 mit einer Höhe 20 ist dem Stopper benachbart angeordnet. Die Profilhöhe 10 der Profilierung ist niedriger als die Höhe der Sicke 20.

Figur 3 zeigt eine schematische, seitliche Schnittansicht durch einen Teil einer Flachdichtung mit einer weiteren Ausführungsform der erfindungsmäßigen Profilierung. Wie in den Figuren 1 und 2 weist eine metallische Lage 1 eine Profilierung 5 auf. Die Profilierung umfasst in diesem Fall neben der wellenförmigen Struktur 5a eine Kontur 5d, bei der sich die abgerundeten Abschnitte jeweils in der Mitte der Wellenberge der wellenförmigen Struktur in einer Ecke treffen. Auch hier ist der Profilierung eine Sicke 7 benachbart. Die Profilhöhe 10 der Profilierung, die sich von der Amplitude der wellenförmigen Struktur bis zur Höhe der abgerundeten Abschnitte der Kontur erstrecken, ist auch in diesem Fall niedriger als die Höhe der Sicke 7.

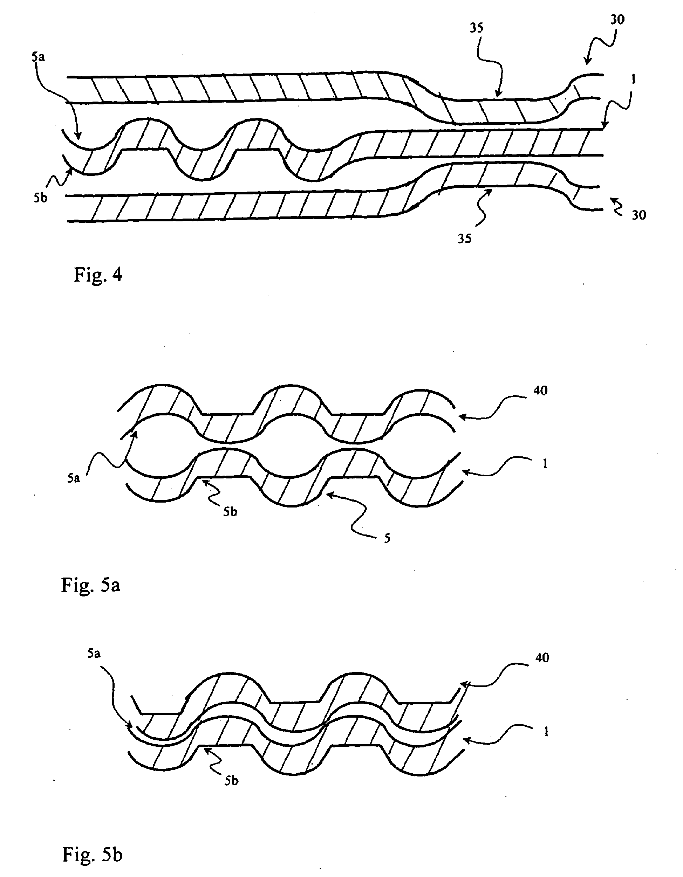

Figur 4 zeigt eine schematische, seitliche Schnittansicht durch einen Teil einer dreilagigen Flachdichtung. Die zwei außen liegenden Lagen 30 weisen jeweils eine Sicke 35 auf. Zwischen den beiden gesickten Lagen ist eine metallische Lage 1 mit der erfindungsmäßigen Profilierung angeordnet. Die metallische Lage 1 wirkt als Stopper für die beiden gesickten Lagen 30. Dazu ist in die metallische Lage 1 eine Profilierung eingeprägt, die auf der einen Seite eine wellenförmige Struktur 5a und auf der anderen Seite eine Kontur 5b aufweist, die aus einer wellenförmigen Struktur besteht, bei der Spitzen der Wellentäler abgeflacht sind

Figur 5a zeigt einen Teil einer Flachdichtung mit zwei metallischen Lagen 1 und 40. Die beiden Lagen weisen beide die erfindungsmäßige Profilierung 5 mit der wellenförmigen Struktur 5a auf der einen Seite und der Kontur 5b, die aus einer wellenförmigen Struktur besteht, bei der Spitzen der Wellentäler abgeflacht sind, auf der anderen Seite auf. Die beiden Lagen sind spiegelsymmetrisch angeordnet, sodass die Wellenberge der Lage 40 auf den Wellenbergen der Lage 1 zu liegen kommen.

Figur 5b zeigen zwei metallische Lagen 1 und 50 die einen Teil einer Flachdichtung bilden. Beide Lagen weisen die erfindungsmäßige Profilierung 5 mit der wellenförmigen Struktur 5a auf der einen Seite und der Kontur 5b auf der anderen Seite auf. Die beiden Lagen sind zwar spiegelsymmetrisch angeordnet, jedoch im Unterschied zu Figur 5a sind die beiden Lagen hier gegeneinander verschoben, sodass der Wellenberg von Lage 50 in dem Wellental von Lage 1 zu liegen kommt.

## Patentansprüche

1. Flachdichtung mit mindestens einer metallischen Lage (1), wobei die mindestens eine metallische Lage zumindest teilweise eine Profilierung (5) aufweist, die im Querschnitt auf der einen Seite der metallischen Lage eine wellenförmige Struktur (5a) aufweist, **dadurch gekennzeichnet, dass** die Profilierung (5) der der wellenförmigen Struktur (5a) gegenüberliegenden Seite eine Kontur (5b, 5c, 5d) aufweist, in der sich eckige und abgerundete Abschnitte abwechseln.

2. Flachdichtung nach Anspruch 1, **dadurch gekennzeichnet, dass** die mindestens eine metallische Lage (1) benachbart zu der Profilierung (5) eine Sicke (7) aufweist.

3. Flachdichtung nach Anspruch 2, **dadurch gekennzeichnet, dass** die Profilhöhe (10) der Profilierung (5) kleiner ist als die Höhe (20) der Sicke (7).

4. Flachdichtung nach einem der vorstehenden Ansprüche, **dadurch gekennzeichnet, dass** die Wellenberge der wellenförmigen Struktur (5a) zumindest teilweise gleichmäßige Abstände aufweisen.

5. Flachdichtung nach einem der Ansprüche 1 bis 4, **dadurch gekennzeichnet, dass** die Wellenberge der wellenförmigen Struktur (5a) zumindest teilweise unterschiedliche Abstände aufweisen.

6. Flachdichtung nach einem der vorstehenden Ansprüche, **dadurch gekennzeichnet, dass** die abgerundeten Abschnitte der Kontur (5b, 5c, 5d) zumindest teilweise gleichmäßige Abstände aufweisen.

7. Flachdichtung nach einem der vorstehenden Ansprüche, **dadurch gekennzeichnet, dass** die abgerundeten Abschnitte der Kontur (5b, 5c, 5d) zumindest teilweise unterschiedliche Abstände aufweisen.

8. Flachdichtung nach einem der Ansprüche 1 bis 6, **dadurch gekennzeichnet, dass** die Wellentäler der wellenförmigen Struktur (5a) und die abgerundeten Abschnitte der Kontur (5b, 5d) im Wesentlichen senkrecht zu der metallischen Lage fluchten.

9. Flachdichtung nach einem der vorstehenden Ansprüche, **dadurch gekennzeichnet, dass** die Profilhöhe (10) innerhalb der Profilierung (5) variiert.

10. Flachdichtung nach einem der vorstehenden Ansprüche, **dadurch gekennzeichnet, dass** eine weitere metallische Lage (40, 50) vorgesehen ist, die eine ähnliche Profilierung wie die erste metallische Lage (1) aufweist.

11. Flachdichtung nach Anspruch 10, **dadurch gekennzeichnet, dass** die weitere metallische Lage (40) spiegelsymmetrisch zur ersten metallischen Lage (1) angeordnet ist.

12. Flachdichtung nach Anspruch 10, **dadurch gekennzeichnet, dass** die Profilierung der ersten metallischen Lage (1) und die Profilierung der weiteren metallischen Lage (50) zumindest teilweise gegeneinander versetzt angeordnet sind.

13. Flachdichtung nach einem der vorstehenden Ansprüche, **dadurch gekennzeichnet, dass** mindestens eine der metallischen Lagen aus elastischem Federstahl hergestellt ist.

## Claims

1. Flat seal with at least one metallic layer (1), with the at least one metallic layer having at least partially a profile (5) which has a wave-shaped structure (5a) on one side of the metallic layer, as seen in cross section, **characterised in that** the profile (5) of the side which lies opposite the wave-shaped structure (5a) has a contour (5b, 5c, 5d) in which angled and rounded sections alternate.

2. Flat seal according to Claim 1, **characterised in that** the at least one metallic layer (1) has beading (7) adjacent to the profile (5).

3. Flat seal according to Claim 2, **characterised in that** the height (10) of the profile (5) is less than the height (20) of the beading (7).

4. Flat seal according to one of the preceding claims, **characterised in that** the wave peaks of the wave-shaped structure (5a) have at least partially uniform spacing.

5. Flat seal according to one of claims 1 to 4, **characterised in that** the wave peaks of the wave-shaped structure (5a) have at least partially different spacing.

6. Flat seal according to one of the preceding claims, **characterised in that** the rounded sections of the contour (5b, 5c, 5d) have at least partially uniform spacing.

7. Flat seal according to one of the preceding claims, **characterised in that** the rounded sections of the contour (5b, 5c, 5d) have at least partially different spacing.

8. Flat seal according to one of Claims 1 to 6, **characterised in that** the wave troughs of the wave-shaped structure (5a) and the rounded sections of the contour (5b, 5d) align essentially perpendicularly to the metallic layer.

9. Flat seal according to one of the preceding claims, **characterised in that** the profile height (10) varies within the profile (5).

10. Flat seal according to one of the preceding claims, **characterised in that** a further metallic layer (40, 50) is provided which has a similar profile to the first metallic layer (1).

11. Flat seal according to claim 10, **characterised in that** the further metallic layer (40) is arranged mirror-symmetrically to the first metallic layer (1).

12. Flat seal according to Claim 10, **characterised in that** the profile of the first metallic layer (1) and the profile of the further metallic layer (50) are arranged at least partially offset with respect to each other.

13. Flat seal according to one of the preceding claims, **characterised in that** at least one of the metallic layers is produced from elastic spring steel.

## Revendications

1. Joint plat pourvu d'au moins une couche (1) métallique, la au moins une couche métallique présentant au moins en partie un profilage (5), qui présente une structure (5a) ondulée en section sur l'un des côtés de la couche métallique, **caractérisé en ce que** le profilage (5) du côté opposé à la structure (5a) ondulée présente un contour (5b, 5c, 5d) dans lequel des parties anguleuses et arrondies s'alternent.

2. Joint plat selon la revendication 1, **caractérisé en ce que** la au moins une couche (1) métallique présente une moulure (7) à proximité du profilage (5).

3. Joint plat selon la revendication 2, **caractérisé en ce que** la hauteur de profilé (10) du profilage (5) est inférieure à la hauteur (20) de la moulure (7).

4. Joint plat selon l'une quelconque des revendications précédentes, **caractérisé en ce que** les sommets de la structure (5a) ondulée présentent des espacements au moins en partie réguliers.

5. Joint plat selon l'une quelconque des revendications 1 à 4, **caractérisé en ce que** les sommets de la structure (5a) ondulée présentent des espacements au moins en partie différents.

6. Joint plat selon l'une quelconque des revendications précédentes, **caractérisé en ce que** les parties arrondies du contour (5b, 5c, 5d) présentent des espacements au moins en partie réguliers.

7. Joint plat selon l'une quelconque des revendications précédentes, **caractérisé en ce que** les parties arrondies du contour (5b, 5c, 5d) présentent des espacements au moins en partie différents.

8. Joint plat selon l'une quelconque des revendications 1 à 6, **caractérisé en ce que** les creux de la structure (5a) ondulée et les parties arrondies du contour (5b, 5d) sont alignés pratiquement perpendiculairement à la couche métallique.

9. Joint plat selon l'une quelconque des revendications précédentes, **caractérisé en ce que** la hauteur de profilé (10) varie à l'intérieur du profilage (5).

10. Joint plat selon l'une quelconque des revendications précédentes, **caractérisé en ce qu'**il est prévu une autre couche (40, 50) métallique qui présente un profilage identique à la première couche (1) métallique.

11. Joint plat selon la revendication 10, **caractérisé en ce que** l'autre couche (40) métallique est disposée de façon symétrique par rapport à la première couche (1) métallique.

12. Joint plat selon la revendication 10, **caractérisé en ce que** le profilage de la première couche (1) métallique et le profilage de l'autre couche (50) métallique sont disposés au moins en partie décalés l'un par rapport à l'autre.

13. Joint plat selon l'une quelconque des revendications précédentes, **caractérisé en ce que** au moins l'une des couches métalliques est fabriquée à base d'acier pour ressort élastique.
